(19) **Europäisches Patentamt**

**European Patent Office**

**Office européen des brevets**

(11) **EP 1 420 094 B1**

(12) **EUROPEAN PATENT SPECIFICATION**

(45) Date of publication and mention
of the grant of the patent:
**25.05.2005 Bulletin 2005/21**

(51) Int Cl.⁷: **D03D 15/00**

(21) Application number: **03025188.8**

(22) Date of filing: **04.11.2003**

(54) **Fabric for composite materials comprising active threads, and method for obtaining said fabric**

Gewebe für Verbundstoffe mit aktiven Fäden, und Herstellungsverfahren

Tissu pour matériaux composites comprenant des fils actifs, et méthode d'obtention

(84) Designated Contracting States:
**AT BE BG CH CY CZ DE DK EE ES FI FR GB GR
HU IE IT LI LU MC NL PT RO SE SI SK TR**

(30) Priority: **14.11.2002 IT to20020989**

(43) Date of publication of application:
**19.05.2004 Bulletin 2004/21**

(73) Proprietor: **C.R.F. Società Consortile per Azioni
10043 Orbassano (Torino) (IT)**

(72) Inventors:
• **Butera, Francesco
10100 Torino (IT)**
• **Alacqua, Stefano
10090 Cascine Vica-Rivoli (Torino) (IT)**

(74) Representative: **Notaro, Giancarlo et al
Buzzi, Notaro & Antonielli d'Oulx Srl
Via Maria Vittoria 18
10123 Torino (IT)**

(56) References cited:
**WO-A-00/67539          DE-A- 19 829 202
DE-C- 4 033 091          FR-A- 2 561 789
US-A- 4 772 092          US-A- 5 524 679
US-A- 5 906 004**

## Description

The present invention relates in general to the field of composite materials, of the type comprising a matrix typically made of resin and reinforcing fibres, such as, for example, carbon fibres, glass fibres and aramidic fibres. In particular, the invention relates to the composite materials referred to as active functional composites. These are composite materials, which are made of a matrix within which there are englobed fibres of active material that are able to transmit to the matrix the strain that they themselves undergo as a result of electrical or thermal stimuli and hence are able to render said surfaces active. Functional composites combine the excellent mechanical properties of composites with the properties of active materials, which are also referred to as "smart materials", such as, for example, shape-memory alloys (SMAs) and electro-active polymers (EAPs), so as to obtain a material which is able to vary its own mechanical characteristics (strain, strength) if stimulated from outside by signals of an electrical, thermal, magnetic type, etc.

Active materials are materials that are able to change their own mechanical characteristics, and hence are able to perform a work, if stimulated from outside by signals of an electrical, thermal, magnetic type, etc.; conversely, they are able to produce an electrical signal if they undergo mechanical stress, and hence are able to function as sensors. Amongst the main active materials, the most interesting ones in terms of industrial maturity are: piezoelectric ceramics and polymers, shape-memory materials, electro-active polymers, magnetostrictive materials and magneto-electro-rheological fluids.

The most widely used shape-memory materials are metal alloys that are able to undergo a variation in macroscopic shape following upon a reversible martensitic transformation and thus perform a work if stimulated thermally via external heating or passage of current. This phenomenon occurs, in the majority of cases, when the alloy is heated beyond a certain temperature, at which phase transformation takes place (i.e., from martensite to austenite) which causes a rearrangement of the atoms within the crystal lattice and a consequent dimensional variation.

The fundamental mechanisms underlying the shape-memory effect are the complete reversibility of the martensitic transformation and its thermo-elastic nature. Martensitic transformation is a structural transformation of the first order without diffusion, caused by tangential creep of consecutive atomic planes. It starts at a temperature $(M_s)$, propagates in the parent phase, and does not conclude until it reaches a temperature $M_f <$ $M_s$. Since the strain of the lattice, caused by the transformation itself, inevitably induces a strong stress in the matrix, which hinders or stops nucleation and further propagation of the martensitic phase, the transformation is always accompanied by a variation in volume and shape.

The basic feature of martensitic transformation of shape-memory alloys is that the transformation presents a thermo-elastic nature; i.e., the martensitic plates, which, upon cooling, nucleate on pre-set crystal planes of the austenite and grow on said planes in certain crystallographic directions so as to establish precise relations of reciprocal orientation, have the capacity for setting themselves with minor tangential creep at the edges of the plates and/or by twinning thereof so as not to cause a macroscopic change in the shape of the material.

Once the transformation is complete, from the austenitic monocrystal there is obtained a structure formed by a number of variously oriented martensitic variants, the number of which will depend upon the symmetry of the austenite lattice. Upon heating (reverse austenitic transformation) formation (nucleation) of the austenite will occur on the martensitic plates according to the same austenite/martensite crystallographic relations, and, since each variant of the matrix is obtained from a single crystal, the end of the reverse transformation will lead to the original monocrystal.

The mechanism upon which the shape-memory effect is based is the complete reversibility of martensitic transformation. In fact, the material subjected to forms of thermal treatment that are able to induce first the austenite/martensite transformation (during cooling) and then the reverse transformation, which brings it back to the austenitic state (during heating), is able to reassume the exact crystalline orientation that it had prior to forward transformation, whatever the mechanical treatment that it may have undergone in the martensitic state.

Commercial shape-memory alloys are prevalently Ni-Ti-based and Cu-based. Ni-Ti-based alloys present good ductility, a good solubility range, processability in vacuum conditions during synthesis, good resistance to corrosion, and excellent mechanical characteristics. Cu-base alloys, instead, present a low production cost, processability in air, ease of modification of transformation temperatures, but poor mechanical characteristics.

In addition to metal alloys, there are also shape-memory polymers (SMPs). A shape-memory polymer is able to modify its stiffness and shape according to the temperature to which it is exposed. If heated, this material passes rapidly from a vitreous state to a highly deformable rubbery state, and then returns equally rapidly, when it is cooled down, to its original shape and hardness. Precisely on account of this particular characteristic, it is possible to model the polymer with extreme ease, provided that the operation is carried out beyond the transition temperature, causing it to assume a wide range of shapes and then to "fix" thereon the desired shape via rapid cooling. SMPs are available in the form of pellets or as solutions and can be formed using standard processes such as extrusion, hot injection, pouring or coating. Unlike shape-memory alloys the transformation cycle of SMPs does not present hysteresis.

Furthermore, in a way similar to metal alloys, thanks to their "memory", SMPs can reassume their original shape an infinite number of times, in the absence of impressed forces, if they are again brought back beyond their critical temperature. There exist standard transition temperatures envisaged by the producer (25°C, 30°C, 35°C, 45°C and 55°C ), but in addition to the possibility of specific transition temperatures between -30°C and +70°C being required of the material, it may also be possible to programme the "transition range" itself. Other properties characterizing SMPs are the capacity for absorption of impact and variable transpiration. If the SMP is produced in the form of a thin film, in fact, the permeability of the film varies with the temperature. In the transition phase the polymer affords a damping from three to five times higher than a comparable rubber product and increases its transpiration value by a factor of 10 in the course of transition to the rubbery state, at the same time maintaining total impermeablity.

Another category of active materials is represented by electro-active polymers. These are polymeric materials capable of undergoing strain if an electric field is applied thereto. These can be distinguished into: electrostrictive polymers, ion-polymer-metal composites (IPMCs), and conductive polymers.

Another category of active materials is that of electrostrictive polymers, i.e., materials which, when they are subjected to electric fields (usually via deformable electrodes), react with a reduction in the dimension parallel to the field, and an enlargement in a direction normal thereto.

The above phenomenon occurs principally for mechanical reasons of squeezing by the electrodes themselves in the case of incompressible elastomeric polymers, whereas, in the case of semicrystalline and stiffer polymers, the causes are to be put down more to re-orientations of the dipoles present in the polymer chains. Elastomeric polymers can produce the largest strains, up to 60% and beyond, even though forces lower than those of semicrystalline polymers are developed.

The electrodes used for applying an electric field on this type of polymer are obtained using particular materials and processes so that they will be as deformable as possible and perform the dual function of favouring the strains of the polymer, on the one hand, and of increasing them on the other, thanks to their expansive response to the phenomenon of repulsion of charges of the same sign located therein.

The dual action of compression and expansion by the electrodes adds its own effects to the natural response of the material. From this complex of effects there follow quadratic strains as a function of the electric field that is generated via the application of a voltage on the electrodes between which the material in question is set, exactly as occurs with a dielectric between the plates of a capacitor.

The electrostrictive contribution, which is the second addendum of the formula given below, is hence proportional to the square of the electric field and is distinct from the first addendum, which, instead, represents the piezoelectric contribution proportional to the field itself.

$$S = A\,E + M\,E^2 + \text{other contributions}$$

(where S = strain in the direction of the field, A = piezoelectric coefficient, M = electrostrictive coefficient, E = electric field).

The very high dielectric breakdown voltages of these materials make it possible to push the electric fields up to levels such as to bring about strains defined as "giant strains" in the literature. In fact, for some electrostrictive polymers with low elastic modulus strains higher than 100% in surface and 80% in thickness are recorded, without prejudice to the pressures developed, which are of modest amounts. Such sizeable strains and development of forces of some importance are two qualities that immediately suggest the possibility of application of these polymers in the field of actuators, and in the last few years research at a world-wide level has been concentrating a great deal of efforts in the study of electrostrictive polymers and in experimentation of actuators made therewith.

In order to obtain larger forces, a number of identical actuators may be set in parallel; in order to increase displacements, the actuators can be set in series, and the same criterion may be used if the aim is to reduce the size of the individual actuator. The outstanding characteristics of actuators made using such materials are lightness, small overall dimensions, simplicity of production, economy, the presence of la large number of variables that can be modified in order to achieve an extremely wide range of results of actuation, and - a factor that renders the similarity between this kind of actuator and human muscle very close - scale invariability. Although amongst polymeric materials excellent actuators are already known, such as piezoelectric polymers, or shape-memory polymers, or electrochemically activated conductive polymers, which, like all polymers, are materials that are light, easy to model into any shape, inexpensive, and ones that present properties that can be readily varied chemically, electrostrictive polymers (EPs) generate the largest strains, albeit maintaining excellent levels of energy density and considerable forces of actuation. There exist many types of electrostrictive polymers, which react to the application of an electric field for various physical reasons. The first category is represented by basically semicrystalline polymers, for which the phenomenon underlying electrostriction is prevalently the re-orientation of dipoles present in the polymeric chains, as occurs for example with polyvinylidene fluoride (PVDF) and with some of its copolymers, such as, for example, poly(vinylidene fluoride-hexafluoropropylene) (P(VDF-HFP)). The said materials for the most part present a stiff consistency, on account of their partially crystalline nature and, at an experimental level, present the lowest strains, rarely exceeding 3-4%, values which are in any case considerable. Their molecular structure, which is formed by polymeric chains embedded in an amorphous matrix, renders the molecular movements that are activated upon biasing with electric fields the main factor responsible for the electrostrictive strains. The dipoles contained in their chains tend, in fact, to orient themselves according to the electric field, causing strains which usually do not show up to an equal extent in thickness and in surface, since the chains are not aligned to one another nor arranged in a planar way in space. On the other hand, it is not by any chance that the strain of these materials increases considerably following upon the so-called "pre-stretching", which consists in a prior elongation of the specimens (usually in the form of films) and precisely has the function of aligning the chains present therein in such a way that the ???contributions to strain caused by the electric field cancel out as little as possible, and the effect of the molecular movements proves macroscopic. The second category mostly comprises, instead, amorphous polymers (electrostrictive elastomers), which are devoid of orderly crystalline structures and manifest electrostrictive strain above all on account of Coulomb phenomena, which act effectively thanks to the particular mechanical properties of these materials. The said materials are basically amorphous rubbers, which present excellent dielectric properties, are much more deformable than the materials belonging to the first category, and are able to produce strains of beyond 100% of the surface area. The materials most widely used as electrostrictive elastomers are acrylic polymers (polymethylacrylate, polymethylmethacrylate), which are described hereinafter, silicones and the fluorosilicones.

Since such materials are practically devoid of a crystalline structure, the only phenomenon that is responsible for their electrostrictive strains is the effect of Coulomb attraction and repulsion between the charges present in the electrodes to which the voltage is applied. Basically, since they are rubbery materials, they allow the electrodes to approach one another, so exerting a squeezing action on the material. Furthermore, since they are highly deformable, they allow the electrodes themselves to expand in surface under the action of the repulsive force between charges of the same sign that are present therein, provided that the electrodes themselves are in turn deformable, or compliant, this being an aim pursued for making actuators that are capable of large deformations. The increase in surface of the electrodes, moreover, is not only favoured by the deformability of the material, but is also favoured by the natural tendency of the material itself to expand, which, given that it is normally incompressible, when it is reduced in thickness it maintains its own volume constant, increasing its surface.

The Coulomb effect, which for the materials of the first category was secondary with respect to the internal rearrangements which occur in the polymeric chains, in this case becomes the main motive force of electrostriction.

IPMC, instead, is just one of the different names used to designate these particular materials, i. e., ion-metal composites with terminations capable of ionizing in polar liquids. One of the most widely used IPMC is *NAFION®* produced by *DuPont,* which is used as "artificial muscle" after porous electrodes have been made, usually by reduction of metals, on the faces of a strip of composite: the electrodes thus made have a "dendritic" structure, which is highly permeable to water or in any case to a fluid. Artificial muscles mainly perform the movement of bending (see Figure 10). Usually, commercially available IPMCs are in the form of sheets or films of small thickness (less than one millimetre), which are porous and function if they are moistened with polar liquids, typically water.

Long-lasting humidification can be achieved by providing them with hydrophilic surfaces that withhold liquid or with thin coating films that contain them.

The polar liquid penetrates, through the external porosities into the polymeric structure, the chains of which form a lattice with a mesh that is wide enough for the fluid to move easily inside it, and ionizes the terminals present at the ends of the polymeric chains. This causes release of positive ions that are solvated by molecules of water and remain initially in the neighbourhood of the negative ions that have remained on the polymeric chains. Application of an electric field causes displacement of the mobile, positive, ions, which move towards the negatively charged electrode, drawing after them the mass of the solvation molecules. At this point a bending takes place, which is probably due to the following two causes (of which the former seems to be preponderant): the displacement of volumes of water that shift over onto just one side (i.e., towards the negatively charged electrode), and the interactions between the fixed ions that remain on the chains, both between one another and with the mobile ions. Some mathematical models have been developed, which attempt to provide an interpretation of the phenomenon; however, there does not yet exist total clarity on the exact dynamics governing the phenomenon.

Conductive polymers are polymers which, as their ionization varies, change their physical properties and in particular their conductivity, their optical properties (for example, colour) and their mechanical properties and dimensions, and may consequently be used, to great advantage, both as sensitive elements and as mechanical actuators. Although they have some structural characteristics in common, the various conductive polymers may have extremely different properties. On account of their particular characteristics, polyparaphenylene, polythiophene, polypyrrole and polyaniline have been the subject of considerable attention, but it is polyacetylene which is considered to be the prototype of conductive polymers and is undoubtedly the most widely studied. Numbered amongst its applications are: mechanical sensors, chemical sensors, actuators, and latest-generation display systems. The strong points of actuators are: the considerable mechanical force, the high pressure generated (10 times that of human muscle), and the low voltage required (1-5 V).

As has been mentioned above, some types of functional composite materials have already been proposed. The methods for obtaining deformation of a stiff surface have for some time now formed the subject of study and classically envisage the use of actuators of various types, applied externally and mechanically connected to the surface that is to undergo deformation. Systems of this sort are frequently applied in the aeronautics field for moving flaps or for modelling wings or rotors, and enable excellent mechanical performance but present large overall dimensions, large weights and high costs, which are not compatible with automotive applications. In what follows some significant examples of prototypes developed through the mechanical integration of external actuators are given.

A first study, co-ordinated by NASA researchers, has investigated the possibility of controlling wing profiles using high-strain piezoelectric actuators (Piezoelectric THUNDER Wafer).

With the purpose of obtaining large strains, AMSL researchers working at MIT have developed an actuator by applying the principle of the lever and using standard piezoelectric materials (X-Frame Actuator).

High-strain piezoelectric actuators of the type referred to above have been used, for example, in rotors for helicopters or wings for aeroplanes, with the aim of modifying the profile and thus varying the angle of attack and consequently the lift.

In this way, there have been obtained deflections of up to 5° of a flap of width equal to 20% of the chord and length equal to 90% of the wingspan, thus revealing the real possibility of constructing wings with variable profile by using external actuators. US-A-5 524 670, discloses a fabric of structural fibres and a plurality of active threads interwoven with the structural fibres. The active threads are optical fibres. DE 198 29 202 A1 refers to a microsystem with shape memory means.

The purpose of the present invention is to propose a new-generation active functional composite material, with characteristics of high efficiency, reliability and a low production costs, suitable for a wide range of applications, above all in the automotive field, for example, for construction of active aerodynamic surfaces and panels for high-performance motor vehicles, fan blades with variable incidence for cooling systems of motor-vehicle engines, active transpirant fabrics with variable weave, for example for seats of motor vehicles, and active surfaces for dashboards and interiors of motor vehicles.

With a view to achieving the above and yet further purposes, the invention is basically aimed at providing an active fabric which comprises the features of claim 1. The fabric thus formed is designed to be englobed in a resin and subjected to the usual forms of treatment.

The active threads are chosen among the types referred to in claim 1.

In the invention, the fabric is provided with electrical contacts, which are connected to the active threads and are made of metal threads interwoven with the active threads.

In the case of the preferred embodiment, the fabric according to the invention is prepared in the form of an elongated strip, with a predominant longitudinal direction. In this case, the active threads can be pre-arranged parallel to and at a distance from one another in said longitudinal direction, in which case the electrical contacts are constituted by threads interwoven with the active threads set transverse to the longitudinal direction. In an alternative embodiment, the active threads are set parallel to and alongside one another, but transverse to the longitudinal direction of the fabric, whilst the electrical contacts are constituted by threads that connect the ends of two adjacent active threads to one another, so as to give rise to a connection in series, in parallel, or in series of parallel threads of all the active threads. The major advantage of the fabric according to the invention lies in the fact that it is able to form a soft functional composite, which is able to vary its weave following upon application of an external stimulus, which is of an electric type. The fabric can be made entirely as a classic fabric, or else even as a multilayer structure.

The fabric thus formed can thus be stocked in rolls and cut to the desired length to provide structures of composite material, according to techniques in themselves known. The structural element thus obtained will be able to vary its characteristics, and, in particular, its shape, according to the way in which the active threads are used.

As has already been said, the invention is mainly designed for application in the automotive field, for example for aerodynamic surfaces and panels in high-performance motor vehicles, or for fan blades with variable incidence for engine-cooling systems, or for active transpirant fabrics with variable weave for the seats of motor vehicles, or for active surfaces for dashboard and interiors of motor vehicles, or for any other element of the motor vehicle that is suited to for the aforesaid application. The invention may, however, be applied to advantage also in other industrial fields, such as the aeronautics field, the domestic field, the clothing sector, domestic air-conditioning, industrial-cooling systems, etc.

The advantage of the use of structural elements made with the fabric according to the invention lies in the fact that said elements do not require provision of actuator elements external to the structural element to obtain the desired variations in geometry. Fabrication of the material according to the invention in the form of fabric moreover renders this material enormously versatile from the standpoint of its possibilities of application.

Further characteristics and advantages of the invention will emerge from the ensuing description with reference to the annexed drawings, which are provided purely by way of non-limiting example, and in which:

- Figure 1 is a schematic view of a first embodiment of a fabric according to the invention; and
- Figure 2 illustrates a variant of the embodiment of Figure 1.

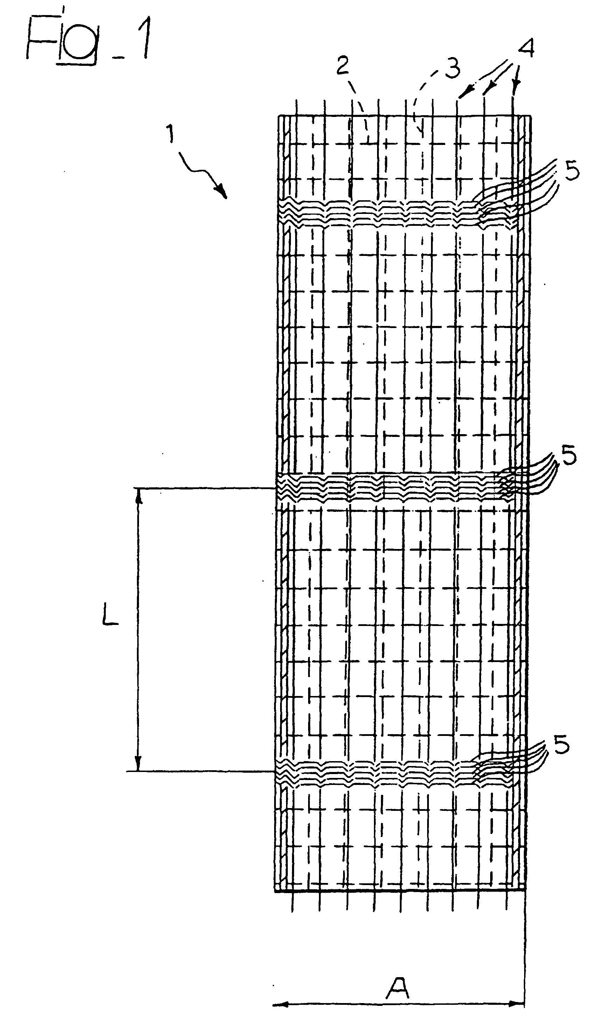

With reference to Figure 1, number 1 designates as a whole a fabric made according to the teachings of the present invention, in the form of a continuous strip, from which there can be cut each time the portions of fabric necessary for providing a pre-set component of composite material. The techniques that can be used for obtaining the component starting from the fabric are the ones notorious in the field of use of composite materials and in particular of fabrics made of composite material.

In the drawing, the lines 2 and 3 designate the threads of the weft and the warp of a fabric made with structural fibres, chosen from among carbon fibres, aramidic fibres or glass fibres. In fabrics with threads of structural fibres 2, 3 there are also provided active threads 4, made, for example, of shape-memory material, or else of electro-active polymers. In the example illustrated in Figure 1, the active threads 4 extend parallel to and alongside one another, in the longitudinal direction of the strip of fabric, which has a pre-set width A and an indefinite length, it being possible for the portions of fabric designed to provide the structural components of interest to be cut to the desired length starting from the strip of fabric 1. Electrically conductive threads 5, for example, metal threads are interwoven only with the active threads 4. As may be seen from Figure 1, these threads are arranged in groups at a regular pitch L along the strip of fabric, the threads of each group extending parallel to and alongside one another in a direction orthogonal to the longitudinal direction of the strip of fabric. Once the required portion of fabric has been obtained, the threads 5 will constitute electrical contacts which enable application of a voltage at the ends of the groups of active threads 4, which extend between the two groups of conductive threads 5 used. Of course, it is also possible to use a number of pairs of groups of conductive threads 5 for tensioning the active threads of the desired portions of fabric, each thread 5 of each group of conductive threads coming under a respective active thread 4, so that the active threads comprised between two successive groups of conductive threads 5 are connected in parallel to one another.

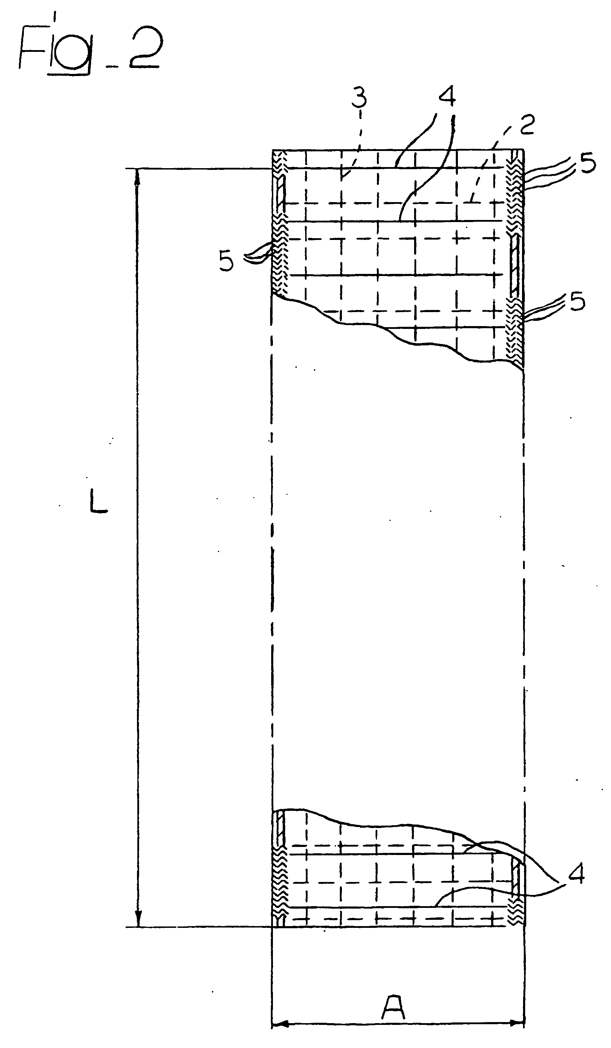

Figure 2 illustrates a variant in which the conductive threads and the active threads 4 are set parallel to and at a distance from one another, in a direction transverse to the longitudinal direction of the strip of fabric. The conductive threads 5 are set on the two longitudinal edges of the strip so as to connect the ends of the transverse active threads to one another alternately on one side and on the other of the strip, so that the various active threads 4 are connected to one another in series according to a serpentine path, the electrical contacts set at the ends of said serpentine path, which have a longitudinal length L in Figure 2, being designed to be connected to the electric supply.

It is evident that, for one and the same strip of fabric, it is possible to think of hybrid solutions resulting from a combination of the solutions illustrated above in such a way as to obtain the desired specific characteristics suited for the particular application of interest.

Of course, without prejudice the principle of the invention, the details of construction and the embodiments may vary widely with respect to what is described and illustrated herein purely by way of example, without thereby departing from the scope of the present invention.

## Claims

1. An active fabric comprising a fabric of structural fibres (2, 3) and a plurality of active threads (4) interwoven with the structural fibres (2, 3),
   **characterized in that** the structural fibres (2, 3) are chosen from among: carbon fibres, aramidic fibres, glass fibres or combination thereof,
   **in that** it comprises conductive threads (5), which function as electrical contacts interwoven with the active threads (4), and
   **in that** the active threads (4) are made of a material chosen from among: shape-memory metal alloys, electro-active polymers, and electrostrictive polymers,
   wherein said conductive threads (5) enable application of a voltage to the active threads (4) so as to obtain a desired variation in geometry of said active fabric.

2. The active fabric of Claim 1, **characterized in that** the active fibres include optical or piezoelectric fibres with the function of sensors.

3. The active fabric according to Claim 1, **characterized in that** it is in the form of an elongated fabric having a longitudinal direction (L) and a transverse direction (A), in which the active threads are set alongside one another and parallel to the longitudinal direction of the fabric.

4. The active fabric according to Claim 1, **character-**

**ized in that** the fabric has an elongated shape with a longitudinal direction (L) and a transverse direction (A), in which the active threads are set parallel to and alongside one another, in a direction transverse to the longitudinal direction of the fabric.

5. The active fabric according to Claim 3, **characterized in that** there are provided conductive threads functioning as electrical contacts interwoven with the longitudinal active threads and set transverse thereto.

6. The active fabric according to Claim 4, **characterized in that** the conductive threads functioning as contacts are arranged in groups interspersed in the longitudinal direction of the fabric with a constant pitch.

7. The active fabric according to Claim 6, **characterized in that** there are provided conductive threads functioning as electrical contacts that connect the ends of active threads adjacent to one another in such a way as to connect the active threads in series, or in parallel, or in series of parallel threads.

8. A method for the production of an active fabric, in which a fabric of structural fibres (2, 3) is woven by interweaving with the structural fibres also a plurality of active threads (4),

   in that the active threads (4) are interwoven with conductive threads (5) functioning as electrical contacts,

   in that the fabric of structural fibres and of active threads is englobed in a resin in order to provide a composite fabric,

   in that the structural fibres (2, 3) are chosen from among carbon fibres, aromidic fibres, glass fibres or combinations thereof,

   in that the active threads (4) are made of a material chosen from among : shape-memory metal alloys electro-active polymers, and electrostrictive polymers, and

   in that the conductive threads (5) are provided so as to enable application of a voltage to the active threads (4) in order to obtain a variation of the geometry of the active fabric.

9. The method according to Claim 8, **characterized in that** the fabric is produced in a strip and stocked in a roll.

**Patentansprüche**

1. Aktives Gewebe, aufweisend ein Gewebe von strukturellen Fasern (2, 3) und eine Mehrzahl von aktiven Fäden (4), eingewoben mit den strukturellen Fasern (2, 3),

**dadurch gekennzeichnet, dass** die strukturellen Fasern (2, 3) ausgewählt sind aus: Karbonfasem, Aramidfasern, Glasfasern oder einer Kombination davon,

dadurch, dass es leitende Fäden (5) aufweist, welche als elektrische Kontakte wirken, die mit den aktiven Fäden (4) verwoben sind, und

dadurch, dass die aktiven Fäden (4) aus einem Material hergestellt sind, ausgewählt aus: Formgedächtnis-Metalllegierungen, elektroaktiven Polymeren und elektrostriktiven Polymeren,

wobei die leitenden Fäden (5) ein Anlegen einer Spannung an die aktiven Fäden (4) erlauben, um so eine gewünschte Variation in der Geometrie des aktiven Gewebes zu erhalten.

2. Aktives Gewebe des Anspruchs 1, **dadurch gekennzeichnet, dass** die aktiven Fasern optische oder piezoelektrische Fasern mit der Funktion von Sensoren einschließen.

3. Aktives Gewebe gemäß Anspruch 1, **dadurch gekennzeichnet, dass** es in Form eines länglichen Gewebes vorliegt, welches eine Längsrichtung (L) und eine Querrichtung (A) aufweist, in welchem die aktiven Fäden nebeneinander und parallel zur Längsrichtung des Gewebes gesetzt sind.

4. Aktives Gewebe gemäß Anspruch 1, **dadurch gekennzeichnet, dass** das Gewebe eine längliche Form aufweist mit einer Längsrichtung (L) und einer Querrichtung (A), in welchem die aktiven Fäden parallel und längs zueinander in einer Richtung quer zur Längsrichtung des Gewebes gesetzt sind.

5. Aktives Gewebe gemäß Anspruch 3, **dadurch gekennzeichnet, dass** leitende Fäden vorgesehen sind, welche als elektrische Kontakte wirken, die mit den longitudinalen aktiven Fäden verwoben sind und quer dazu gesetzt sind.

6. Aktives Gewebe gemäß Anspruch 4, **dadurch gekennzeichnet, dass** die leitenden Fäden, die als Kontakte wirken, in Gruppen angeordnet sind, eingestreut in der Längsrichtung des Gewebes mit konstantem Abstand.

7. Aktives Gewebe gemäß Anspruch 6, **dadurch gekennzeichnet, dass** leitende Fäden vorgesehen sind, welche als elektrische Kontakte wirken, welche die Enden der aktiven Fäden, die benachbart zueinander sind, auf solche Art und Weise verbinden, um die aktiven Fäden in Reihen oder parallel oder in Reihen von parallelen Fäden zu verbinden.

8. Verfahren zur Herstellung eines aktiven Gewebes, bei welchem ein Gewebe von strukturellen Fasern (2, 3) gewebt wird durch Verweben auch einer Mehrzahl von aktiven Fäden (4) mit den strukturellen Fasern,

dadurch, dass die aktiven Fäden (4) mit leitenden Fäden (5) verwoben werden, die als elektrische Kontakte dienen,

dadurch, dass das Gewebe von strukturellen Fasern und von aktiven Fäden eingebettet ist in ein Harz, um ein Kompositgewebe vorzusehen,

dadurch, dass die strukturellen Fasern (2, 3) ausgewählt sind aus: Karbonfasern, Aramidfasern, Glasfasern oder Kombinationen davon,

dadurch, dass die aktiven Fäden (4) aus einem Material hergestellt sind, ausgewählt aus: Formgedächtnis-Metalllegierungen, elektroaktiven Polymeren und elektrostriktiven Polymeren, und

dadurch, dass die leitenden Fäden (5) vorgesehen sind, um ein Anlegen einer Spannung an die aktiven Fäden (4) zu gestatten, um eine Veränderung der Geometrie des aktiven Gewebes zu erhalten.

9. Verfahren gemäß Anspruch 8, **dadurch gekennzeichnet, dass** das Gewebe in einem Streifen hergestellt wird und in Rollenform vorrätig gehalten wird.

**Revendications**

1. Tissu actif comprenant un tissu de fibres structurelles (2, 7) et une pluralité de fils actifs (4) entrelacés avec les fibres structurelles (2, 3),

   **caractérisé en ce que** les fibres structurelles (2, 3) sont choisies parmi des fibres de carbone, des fibres aramidiques, des fibres de verre ou une combinaison de ceux-ci,

   **en ce qu'**il comprend des fils conducteurs (5), qui fonctionnent comme des contacts électriques entrelacés avec les fils actifs (4), et

   **en ce que** les fils actifs (4) sont composés d'un matériau choisi parmi des alliages métalliques à mémoire de forme, des polymères électroactifs, et des polymères électrostrictifs, dans lequel lesdits fils conducteurs (5) permettent l'application d'une tension sur les fils actifs (4) de manière à obtenir une variation souhaitée dans la géométrie dudit tissu actif.

2. Tissu actif selon la revendication 1, **caractérisé en ce que** les fibres actives comprennent des fibres optiques ou piézoélectriques avec la fonction de capteurs.

3. Tissu actif selon la revendication 1, **caractérisé en ce qu'**il est sous la forme d'un tissu allongé comprenant un sens longitudinal (L) et un sens transversal (A), dans lequel les tissus actifs sont disposés le long l'un de l'autre et sont parallèles au sens longitudinal du tissu.

4. Tissu actif selon la revendication 1, **caractérisé en qu'**il présente une forme allongée avec un sens longitudinal (L) et un sens transversal (A), dans lequel les fils actifs sont disposés parallèles et le long l'un de l'autre, dans un sens transversal par rapport au sens longitudinal du tissu.

5. Tissu actif selon la revendication 3, **caractérisé en que** des fils conducteurs sont fournis fonctionnant comme des contacts électriques entrelacés avec des fils actifs dans le sens longitudinal et disposés de manière transversale par rapport à ceux-ci.

6. Tissu actif selon la revendication 4, **caractérisé en ce que** les fils conducteurs fonctionnant comme des contacts sont agencés dans des groupes parsemés dans le sens longitudinal du tissu à des distances constantes.

7. Tissu actif selon la revendication 6, **caractérisé en que** des fils conducteurs sont fournis fonctionnant comme des contacts électriques qui raccordent les extrémités des fils actifs adjacentes les unes aux autres de manière à raccorder les fils actifs en série, ou en parallèle, ou en série de fils parallèles.

8. Procédé de fabrication d'un tissu actif, dans lequel un tissu de fibres structurelles (2, 3) est tissé en entrelaçant avec les fibres structurelles également une pluralité de fils actifs (4),

   **caractérisé en ce que** les fils actifs (4) sont entrelacés avec des fils conducteurs (5) fonctionnant comme des contacts électriques,

   **en ce que** le tissu de fibres structurelles et de fils actifs est englobé dans une résine afin de fournir un tissu composite,

   **en ce que** les fibres structurelles (2, 3) sont choisies parmi des fibres de carbone, des fibres aramidiques, des fibres de verre ou une combinaison de celles-ci,

   **en ce que** les fils actifs (4) sont composés d'un matériau choisi parmi des alliages métalliques à mémoire de forme, des polymères électroactifs et des polymères électrostrictifs, et

   **en ce que** les fils conducteurs (5) sont fournis de manière à permettre l'application d'une tension sur les fils actifs (4) afin d'obtenir une variation de la géométrie du tissu actif.

9. Procédé selon la revendication 8, **caractérisé en ce que** le tissu est produit sur une bande et stocké dans un rouleau.

Fig _ 1

Fig. 2